Europäisches Patentamt

European Patent Office

Office européen des brevets

(11) Numéro de publication: **0 270 457**
**A2**

## (12) DEMANDE DE BREVET EUROPEEN

(21) Numéro de dépôt: **87402705.5**

(22) Date de dépôt: **01.12.87**

(51) Int. Cl.⁴: **G 06 F 9/44**
G 06 F 15/00, G 06 F 15/16

(30) Priorité: **01.12.86 FR 8616758**

(43) Date de publication de la demande:
**08.06.88 Bulletin 88/23**

(84) Etats contractants désignés: **DE FR GB IT**

(71) Demandeur: **Heudin, Jean-Claude**
**3bis, rue Pierre Brossolette**
**F-93360 Neuilly Plaisance (FR)**

(72) Inventeur: **Heudin, Jean-Claude**
**3bis, rue Pierre Brossolette**
**F-93360 Neuilly Plaisance (FR)**

**Metivier, Christophe**
**9, rue de la Pommeraie**
**F-78530 Buc (FR)**

**Devos, Francis**
**12, rue des Chardonnerets**
**F-91040 Les Ulis (FR)**

**Maurin, Thierry**
**1, avenue Bertheiot, L'hacquinière**
**F-91440 Bure sur Yvette (FR)**

**Demigny, Didier**
**8, Les Chateaux, Bruloir**
**F-95000 Cergy (FR)**

(74) Mandataire: **Joly, Jean-Jacques et al**
**CABINET BEAU DE LOMENIE 55, rue d'Amsterdam**
**F-75008 Paris (FR)**

(54) **Machine informatique destinée à l'exécution de traitements symboliques pour les applications de l'intelligence artificielle.**

㉗ La machine comporte plusieurs processeurs symboliques (10) intégrés à jeu d'instructions réduit organisé autour d'un système de communication, chacun d'eux disposant d'une unité arithmétique et logique (102) reliée à plusieurs bus internes, une unité (140) de gestion des registres dotée d'un banc mémoire circulaire interne organisé en fenêtres de registres, une unité de recherche d'instructions interne (108), un séquenceur interne (115), deux bus externes (107, 109) permettant l'accès à une mémoire locale organisée en trois bancs de mémoire externes distincts, respectivement un premier banc de mémoire (110) réservé au code exécutable composé de 32 instructions différentes manipulant trois opérandes et basées sur un format unique, un deuxième banc de mémoire (120) réservé au données et organisé en cellules étiquetées composées de trois champs et un troisième banc de mémoire (130) organisé en pile de données, chaque banc mémoire étant associé à un circuit d'exploitation interne particulier.

FIGURE 2

UGP: unité de gestion de la pile
UGC: unité de gestion des cellules
UGR: unité de gestion des registres
UAL: unité arithmétique et logique
URI: unité de recherche d'instruction
S: séquenceur

## Description

## Machine informatique destinée à l'exécution de traitements symboliques pour les applications de l'intelligence artificielle

La présente invention concerne une machine informatique parallèle destinée à l'exécution de traitements symboliques pour les applications de l'intelligence artificielle.

Les progrès technologiques et la complexification des applications suscitent le besoin de machines informatiques capables non seulement de calculer rapidement, mais aussi de manipuler des symboles. L'inefficacité des machines conventionnelles pour l'exécution des traitements symboliques n'est plus à démontrer. C'est pourquoi différentes machines adaptées aux traitements symboliques ont déjà été proposées, notamment les machines de la série "3600" de la société des Etats-Unis d'Amérique "Symbolics", la machine "Explorer" de la société des Etats-Unis d'Amérique "Texas Instruments", et la machine "MAIA" développée en France par le Centre National d'Etude des Télécommunications et la Compagnie Générale d'Electricitié et présentée entre autres dans un article de J.-P. Sansonnet (Matériels et Logiciels pour la 5e génération AFCET 1985).

Les principales caractéristiques de telles machines adaptées aux traitements symboliques résident dans un unique processeur microprogrammable doté d'un jeu d'instructions nombreuses et complexes et une mémoire centrale étiquetée permettant de discerner les objects stockés. Le fait d'attribuer à chaque mot mémoire une information sémantique permet de différencier, au moment de l'exécution, les types d'actions à effectuer en fonction des objets manipulés. Cette technique est à la base des langages de l'intelligence artificielle comme, par exemple, "Lisp" ou "Prolog". Une autre caractéristique, qui illustre le non-déterminisme et l'aspect dynamique de ces langages, est la nécessité d'un mécanisme d'allocation et de récupération mémoire. Ce dernier est généralement microprogrammé pour les machines évoquées.

Les machines connues mentionnées ci-dessus sont dédiées au développement et à la mise au point de programmes. Leur objectif est de fournir au programmeur un poste de développement complet, puissant et convivial. En conséquence, ces machines sont dotées de ressources informatiques (notamment mémoire et disque) importantes et ne peuvent fonctionner correctement que dans un environnement informatique ou bureautique dépourvu de contraintes (vibrations, poussières, ...). Par ailleurs, ces machines sont d'un coût et d'un encombrement trop élevés pour pouvoir s'insérer dans une large part des applications potentielles. De plus, la complexité intrinsèque de leur processeur est difficilement intégrable dans un circuit VLSI (circuit à très grande densité d'intégration). Il en résulte que la mise en parallèle de plusieurs de ces processeurs complexes est une tâche difficile sinon impossible.

Aussi, la présente invention a-t-elle pour but de fournir une machine symbolique compacte adaptée à la réalité des applications de l'intelligence artificielle, qu'elles soient industrielles, aéronautiques ou militaires.

Conformément à l'invention, ce but est atteint au moyen d'une machine informatique comportant plusieurs processeurs symboliques à jeu d'instructions réduit organisé autour d'un système de communication, chacun d'eux disposant d'une unité arithmétique et logique, d'une unité de gestion de registres doté d'un banc mémoire organisé en fenêtres de registres, d'un banc de mémoire réservé au code exécutable composé d'un nombre réduit d'instructions différentes manipulant trois opérandes et basées sur un formant unique, d'un banc de mémoire réservé aux données et organisé en cellules étiquetées composées de trois champs et d'un banc de mémoire organisé en pile de données, les banc mémoire étant distincts et chaque banc mémoire étant associé à un circuit d'exploitation interne particulier.

De préférence, chaque processeur symbolique comprend, de façon interne, l'unité arithmétique et logique reliée à plusieurs bus internes, l'unité de gestion de registres, une unité de recherche d'instructions et un séquenceur, tandis que deux bus externes permettent l'accès à une mémoire locale formée par le banc de mémoire réservé au code exécutable, le banc de mémoire réservé aux données et le banc de mémoire organisé en pile.

L'utilisation d'un jeu d'instructions réduit, avantageusement un jeu de 32 instructions, manipulant trois opérandes sur un format unique, donc facilement décodables, l'organisation spécifique des mémoires internes et externes au processeur et le choix pour réaliser ces mémoires de circuits mémoires rapides accessibles par plusieurs but physiquement distincts, permettent de limiter les temps d'accès mémoire et les temps d'exécution des instructions à des valeurs compatibles avec les contraintes de fonctionnement en temps réel des machines d'application. En pratique, chacune des 32 instructions s'exécute en un cycle machine, soit au plus 100 nanosecondes.

Une autre particularité du processeur symbolique dans la machine conforme à l'invention tient à ce qu'il est interruptible, le traitement des interruptions et exceptions étant effectué d'une manière homogène avec la manipulation de symboles en fonction d'indicateurs contenus dans un mot d'état stocké dans un registre interne du processeur.

Plusieurs processeurs dotés de leurs mémoires locales respectives sont associés autour d'un système de communication de données rapide, pour réaliser une machine à haut degré de parallélisme de hautes performances.

L'invention sera mieux comprise à la lecture de la description faite ci-après, à titre indicatif, mais non limitatif, en référence aux dessins annexés sur lesquels :

- la figure 1 est un schéma synoptique d'une machine informatique à haut degré de parallélisme conforme à l'invention,

- la figure 2 est un schéma synoptique fonctionnel d'un processeur symbolique conforme à l'invention,

- la figure 3 illustre le format général d'une instruction contenue dans le banc de mémoire code du processeur de la figure 2,

- la figure 4 illustre le format général d'une cellule de données étiquetées contenue dans le banc de mémoire des données du processeur de la figure 2,

- la figure 5 illustre schématiquement une implantation possible d'un segment de mémoire de fenêtres de registres du processeur de la figure 2.

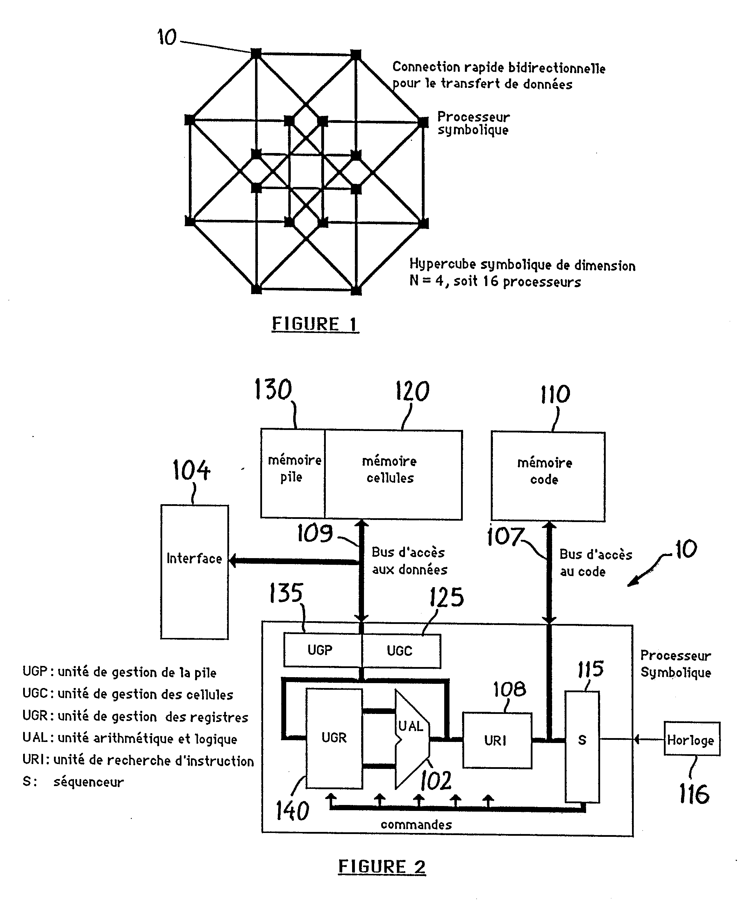

Une machine conforme à l'invention peut avoir une architecture telle que celle représentée par la figure 1. Cette architecture comprend plusieurs processeur symboliques 10, et éventuellement d'autres processeurs spécialisés (calcul flottant, entrées-sorties, ...). Pour réduire au maximum les accès au système de communication, chaque processeur doit posséder la majorité des ressources qui lui sont nécessaires dans son domaine local. En particulier, les programmes sont résidents dans les bancs de mémoires code locaux aux processeurs symboliques, afin de réserver le système de communication aux échanges de données et synchronisations dans l'architecture distribuée. Le système de communication est du type réseau d'interconnexion statique de topologie "hypercube" doté de liens de communication rapides et bidirectionnels. La structure représentée en exemple est caractérisée par une dimension 4 dans laquelle 16 processeurs sont interconnectés par des liens de communications bidirectionnels. Cette structure peut être étendue jusqu'à la dimension 16 permettant ainsi la connexion de 65536 processeurs symboliques. C'est grâce à la complexité réduite du processeur symbolique conforme à l'invention, induite par ses caractéristiques, qu'il est possible de réaliser une machine basée sur ce modèle. A titre indicatif, un processeur symbolique conforme à l'invention a été réalisé avec environ 45 000 transistors, alors que le processeur de la machine de l'art antérieur "Explorer" évoquée plus haut nécessite 553 000 transistors.

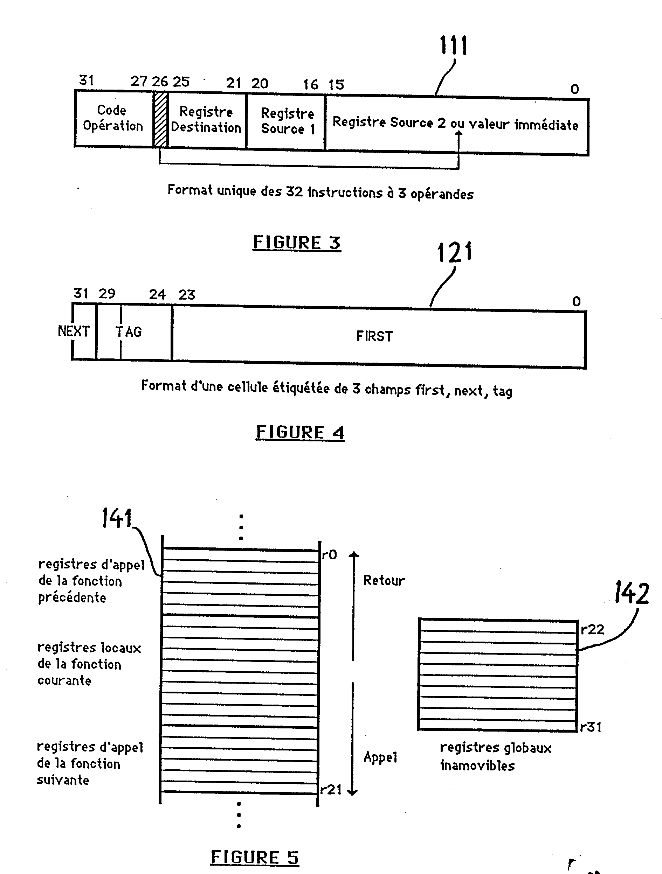

La figure 2 illustre de façon plus détaillée l'organisation d'un processeur symbolique, conformément à la présente invention. Les différents éléments fonctionnels du processeur sont répartis autour d'un ensemble de bus internes spécifiques et comprennent une unité de recherche d'instructions interne 108, une unité de séquencement interne 115 reliée à une horloge externe 116 et assurant le cadencement et la synchronisation de l'exécution, une unité 140 de gestion de registres interne et une unité arithmétique et logique 102 avec décaleur-masqueur reliée à trois bus internes. Selon une caractéristique de l'invention, la mémoire locale de chaque processeur symbolique est partagée en plusieurs bancs physiques de mémoire accessibles par deux bus externes distincts 107, 109 : un banc de mémoire "code" 110, un banc de mémoire "données" 120 et un banc de mémoire "pile" 130. A chaque banc de mémoire est associé un circuit de contrôle et d'accès particulier interne au processeur, à savoir le circuit de recherche d'instructions 108 associé au banc de mémoire code, un circuit 125 de gestion du banc mémoire organisé en cellules étiquetées, et un circuit 135 d'accès et de contrôle du banc de mémoire pile. Les différents bancs de mémoire sont constituées de circuits mémoire rapides, et les mots mémoire sont tous de même longueur, à savoir 32 bits.

Le banc de mémoire code 110 est réservé à l'implantation du code exécutable. Celui-ci se présente sous forme d'une suite séquentille d'instructions parmi un jeu réduit d'instructions ayant toutes la même taille, conformément aux principes d'une architecture RISC (Reduced Instruction Set Computer, ou ordinateur à jeu d'instructions réduit). Selon une particularité du processeur symbolique conforme à l'invention, le jeu d'instructions est constitué par 32 instructions manipulant 3 opérandes et basées sur un format unique, ce qui permet de simplifier l'implantation du processeur et d'accélérer sa vitesse de traitement. Le modèle de format unique 111 contenu dans le banc de mémoire "code" est montré sur la figure 3. Il comprend un premier champ (5 bits) pour le code opération permettant le codage des 32 instructions élémentaires, un deuxième champ (1 bit) spécifiant la nature de la seconde opérande source, un troisième champ (5 bits) pour désigner le registre destination de l'opération, un quatrième champ (5 bits) pour désigner un registre opérande source et un cinquième champ (16 bits) soit pour un second registre opérande source, soit pour une opérande immédiate, la sélection étant fonction du bit du second champ. Les 32 instructions du processeur symbolique conforme à l'invention ne sont pas microprogrammées mais câblées et organisées en quatre grandes catégories : les opérations arithmétiques et logiques, les opérations de contrôle du séquencement, les opérations de traitement symbolique, et les opérations d'accès spécifiques aux différents bancs mémoire externes.

Les opérations arithmétiques et logiques, outre les classiques opérations de calcul et de manipulation de bits qui ne seront pas détaillées ici, comprennent un mécanisme câblé permettant le calcul de l'adresse d'une procédure en fonction du type d'une opérande, et un mécanisme câblé de calcul d'un "hash-code" en fonction de la valeur d'une opérande, un mécanisme câblé de routage d'un message vers sa destination dans un modèle d'architecture conforme au schéma de la figure 1.

Les opérations de contrôle du séquencement comprennent un mécanisme câblé permettant l'appel et le retour de procédure ainsi que les fonctions de sauvegardes des contextes et de passages des paramètres, un mécanisme câblé de saut de programme indirect et relatif, un mécanisme câblé de génération et de retour d'exception, et un mécanisme câblé de test conditionnel invalidant dynamiquement l'exécution de l'instruction suivante selon le résultat du test.

Les opérations de traitement symbolique comprennent un mécanisme câblé d'allocation de cellule étiquetée, un mécanisme câblé de récupération d'une cellule étiquetée inutilisée, un mécanisme câblé de lecture sélective des différents champs d'une cellule étiquetée, et un mécanisme câblé de modification sélective des différents champs d'une cellule étiquetée.

Les opérations d'accès spécifiques comprennent un mécanisme câblé d'accès au banc de mémoire "code", et un mécanisme câblé d'accès au banc mémoire "pile" en mode "dernier-entré premier-sorti".

Le banc de mémoire code est relié au processeur symbolique par l'intermédiaire d'un bus externe spécifique 107, puis aux circuits de recherche d'instructions et séquenceur. L'exécution d'une instruction est débutée et terminée à chaque cycle, celui-ci étant établi par le circuit séquenceur 115 et l'horloge externe 116, l'exécution totale d'une instruction se déroulant sur plusieurs cycles conformément à un modèle d'exécution "pipeline synchrone".

Le banc de mémoire de données 102 est organisé en cellules étiquetées de 32 bits permettant le codage d'objets en structures dynamiques de listes et d'arbres. La figure 4 illustre le format d'une cellule 121 du banc de mémoire de données. Une cellule est constituée de trois champs distincts. Le premier champ "next" indique l'adresse de la cellule suivante constituant la structure de données en liste ou en arbre ; ce champ (2 bits) tire parti d'un mécanisme câblé de codage compact d'adresse, particulier au processeur symbolique conforme à l'invention. Le deuxième champ "tag" (6 bits), ou étiquette, est un descripteur de l'objet représenté par la cellule ; ce champ comprend un ensemble d'informations relatives à la gestion dynamique de la mémoire (2 bits) et une information sémantique sur la nature de l'objet (4 bits). Le troisième champ "first" (24 bits) indique l'adresse du premier élément dans la structure de données en liste ou en arbre, ou une valeur immédiate. Le banc de mémoire de données organisé en cellules étiquetées est relié au processeur par l'intermédiaire d'un bus spécifique de données externe 109, puis au circuit interne 125 de gestion de cellules.

Le banc de mémoire de pile 130 est organisé sous la forme d'une pile de données "LIFO" (Last-In First-Out, dernier-entré premier-sorti) permettant d'empiler ou de dépiler des mots de données de 32 bits. Le banc de mémoire pile est relié au processeur symbolique par le bus externe de données spécifique 109, puis au circuit interne 135 de gestion de la pile.

Le bus externe de données 109 est encore relié à une interface 104 assurent la liaison avec le système de communication.

L'unité de gestion des registres interne comprend un quatrième banc de mémoire distincts, interne au processeur et organisé sous la forme d'une pile circulaire de fenêtres de registres. son organisation est illustrée schématiquement par la figure 5. Il comprend un ensemble de registres 141 susceptibles d'être sauvegardés dynamiquement par les opérations d'appel et de retour de procédures. Ils correspondent aux variable locales des procédures appelées et permettant, grâce au mécanisme de recouvrement partiel de fenêtres, des changements de contexte efficaces. En effet, les programmes mis en oeuvre dans les applications de l'intelligence artificielle comprennent généralement un grand nombre d'instructions d'appel et de retour fonctionnels normalement coûteuses en temps. Le mécanisme câblé de recouvrement de fenêtre permet de réaliser les fonctions d'appel et de retour en une seule instruction en sauvegardant le contexte de la procédure appelante et en passant les paramètres, ceci en décalant un pointeur de fenêtre contenu dans le mot d'état du processeur et, dans le même temps, en modifiant le compteur de programme qui référence la prochaine instruction à exécuter dans le banc de mémoire code.

Dans l'exemple illustré, une fenêtre recouvre trois ensembles de registres : un ensemble de six registres contenant les paramètres passés par la fonction précédente, un ensemble de 10 registres pour l'exécution de la fonction courante et un ensemble de six registres contenant les paramètres pour l'appel de la fonction suivante. Cette unité de gestion des registres interne comprend également des registres globaux inamovibles 142. Parmi ceux-ci, on trouve le pointeur de pile qui référence le sommet de la pile courante dans le banc de mémoire pile, ce registre étant automatiquement mis à jour par les opérations d'accès spécifiques à la pile. Un autre registre global stocke le mot d'état et de contrôle qui donne à la cadence d'exécution des instructions les informations nécessaires au traitement des conditions et des exceptions. La cause d'exécution est codée dans le mot d'état au même endroit que le champ "tag" dans une cellule étiquetée du banc de mémoire de données, de sorte que le traitement des exceptions est réalisé de façon semblable au traitement de cas sur les objets codés dans le banc de mémoire de données.

## Revendications

1. Machine informatique destinée à l'exécution de traitements symboliques pour les applications de l'intelligence artificielle,
caractérisée en ce qu'elle comporte plusieurs processeurs symboliques intégrés (10) à jeu d'instructions réduit organisé autour d'un système de communication, chacun d'eux disposant d'une unité arithmétique et logique (102), d'une unité (140) de gestion de registres dotée d'un banc mémoire organisé en fenêtres de registres, d'un banc de mémoire (110) réservé au code exécutable composé d'un nombre réduit d'instructions différentes manipulant trois opérandes et basées sur un format unique, d'un banc de mémoire (110) réservé au code exécutable composé d'un nombre réduit d'instructions différentes manipulant trois opérandes et basées sur un format unique, d'un banc de mémoire (120) réservé aux données et organisé en cellules étiquetées composées de trois champs et d'un banc de mémoire (130) organisé en pile de données, les bancs mémoires étant distincts et chaque banc mémoire étant associé à un circuit d'exploitation interne particulier.

2. Machine selon la revendication 1, caractérisée en ce que chaque processeur symbolique comprend, de façon interne, l'unité arithmétique et logique (102) reliée à plusieurs bus internes, l'unité (140) de gestion de registres, une unité (108) de recherche d'instructions et un séquenceur (115), tandis que deux bus externes (107, 109) permettent l'accès à une mémoire locale externe formée par le banc de mémoire (110) réservé au code exécutable, le banc de mémoire (120) réservé aux données et le banc de mémoire (130) organisé en pile.

3. Machine selon la revendication 2, caractérisée en ce que la banc de mémoire externe (110) réservé au code est relié au processeur par un bus spécifique (107).

4. Machine selon l'une quelconque des revendications précédentes, caractérisée en ce que le code exécutable est composé de 32 instructions différentes manipulant trois opérandes dans un format unique de cinq champs.

5. Machine selon la revendication 2, caractérisée en ce que le banc de mémoire externe (120) réservé aux données externe est relié au processeur par un bus spécifique de données (109).

6. Machine selon la revendication 5, caractérisée en ce que le banc de mémoire pile externe est accessible en mode "dernier entré premier sorti" par le bus spécifique de données (109).

7. Machine selon l'une quelconque des revendications précédentes, caractérisée en ce que l'unité (140) de gestion des registres interne comprend un banc mémoire circulaire interne organisé en fenêtres de registres.

8. Machine selon l'une quelconque des revendications précédentes, caractérisée en ce qu'elle comprend plusieurs processeurs symboliques (10) organisés autour d'un système de communication de données rapide du type réseau d'interconnection "hypercube".

0270457

Connection rapide bidirectionnelle
pour le transfert de données

Processeur
symbolique

Hypercube symbolique de dimension
N = 4, soit 16 processeurs

**FIGURE 1**

UGP: unité de gestion de la pile
UGC: unité de gestion des cellules
UGR: unité de gestion des registres
UAL: unité arithmétique et logique
URI: unité de recherche d'instruction
S: séquenceur

**FIGURE 2**

0270457

| Code Opération | | Registre Destination | Registre Source 1 | Registre Source 2 ou valeur immédiate |
|---|---|---|---|---|

31    27 26 25    21 20    16 15    111    0

Format unique des 32 instructions à 3 opérandes

## FIGURE 3

| NEXT | TAG | FIRST |
|---|---|---|

31 29    24 23    121    0

Format d'une cellule étiquétée de 3 champs first, next, tag

## FIGURE 4

**141**

registres d'appel
de la fonction
précédente

registres locaux
de la fonction
courante

registres d'appel
de la fonction
suivante

r0

Retour

Appel

r21

**142**

r22

r31

registres globaux
inamovibles

## FIGURE 5